# EUROPÄISCHE PATENTSCHRIFT

(11) **EP 1 652 337 B1**
(45) Veröffentlichungstag und Bekanntmachung des Hinweises auf die Patenterteilung: **22.04.2009**
(21) Anmeldenummer: 04740076.7
(22) Anmeldetag: 16.06.2004
(51) Int. Cl.: H04L 9/32

(54) **VERFAHREN ZUM SIGNIEREN EINER DATENMENGE IN EINEM PUBLIC-KEY-SYSTEM SOWIE EIN DATENVERARBEITUNGSSYSTEM ZUR DURCHFÜHRUNG DES VERFAHRENS**
METHOD FOR SIGNING A DATA SET IN A PUBLIC KEY SYSTEM AND DATA PROCESSING SYSTEM FOR CARRYING OUT SAID METHOD
PROCEDE POUR SIGNER UNE QUANTITE DE DONNEES DANS UN SYSTEME A CLE PUBLIQUE ET SYSTEME DE TRAITEMENT DE DONNEES POUR LA MISE EN OEUVRE DUDIT PROCEDE

(30) Priorität: 07.08.2003 DE 10336148
(43) Veröffentlichungstag der Anmeldung: 03.05.2006
(73) Patentinhaber: Bayerische Motoren Werke Aktiengesellschaft, 80809 München (DE)
(72) Erfinder: BORKE, Danny, 80935 München (DE)
(86) Internationale Anmeldenummer: PCT/EP2004/006632
(87) Internationale Veröffentlichungsnummer: WO 2005/025128

(56) Entgegenhaltungen:
- EP-A- 1 185 026
- WO-A-96/39765
- DE-A- 10 140 721

## Beschreibung

Die Erfindung betrifft insbesondere ein Verfahren zum Signieren einer Datenmenge in einem Public-Key-System.

Unter dem Begriff Datenmenge soll insbesondere ein Zertifikat in einem Public-Key-Verfahren oder eine Software bzw. ein Software-Code bzw. ein Computer-Programm zur Steuerung eines Ablaufs verstanden werden. Das Signieren ermöglicht überprüfen zu können, ob die Datenmenge nach dem Signieren verändert worden ist.

Unter einem Public-Key-System wird insbesondere das in der DE 101 40 721 A1 derselben Anmelderin beschriebene System bzw. ein System verstanden, das das dort beschriebene Verfahren ausführt. In dem bekannten Public-Key-Verfahren werden asymmetrische Schlüssel, d.h. jeweils ein komplementäres Schlüsselpaar bestehend aus geheimem bzw. privatem Schlüssel und einem öffentlichen Schlüssel verwendet. Ein Zertifikat im Sinne des bekannten Public-Key-Verfahrens enthält insbesondere den relevanten öffentlichen Schlüssel und macht insbesondere Angaben zu der Person oder Organisation, um deren öffentlichen Schlüssel es sich handelt. Das Zertifikat wird bei dem bekannten Public-Key-Verfahren von einem sogenannten Trust-Center bzw. einer Signaturstelle mit einer Signatur versehen, die erkennen lässt, ob das Zertifikat verfälscht bzw. geändert worden ist. Hierzu wird üblicherweise ein sogenannter Standard-Hash-Algorithmus verwendet, der auf das Zertifikat und den öffentlichen Schlüssel angewandt wird. Das Ergebnis ist ein Hash-Wert, der das Zertifikat nebst öffentlichem Schlüssel in eindeutiger Weise charakterisiert. Wird das Zertifikat verändert, so würde dies zu einem anderen Hash-Wert führen. Der Hash-Wert wird mit dem geheimen Schlüssel der Signaturstelle verschlüsselt. Das Ergebnis dieser Verschlüsselung ist die sogenannte Signatur des Zertifikats. Signatur, Zertifikat und öffentlicher Schlüssel bilden das signierte Zertifikat. Bei der Überprüfung, ob das signierte Zertifikat oder ein Teil hiervon, wie z.B. der öffentliche Schlüssel, verändert worden ist, wird die Signatur mit dem öffentlichen Schlüssel der Signaturstelle entschlüsselt. Das Ergebnis ist ein erster Hash-Wert. Ferner wird der Standard-Hash-Algorithmus - wie bereits zuvor bei der Bildung der Signatur - auf das Zertifikat nebst öffentlichem Schlüssel angewandt; das Ergebnis ist ein zweiter Hash-Wert. Stimmen der erste Hash-Wert und der zweite Hash-Wert überein, gilt das signierte Zertifikat als unverfälscht.

Ein Verfahren, welches die oben beschriebene Technologie des digitalen Signierens verwendet, wird in dem Dokument WO 96/39765 A offenbart. Das besagte Dokument offenbart ein Verfahren zum Signieren einer Datenmenge in einem Public-Key-System, wie insbesondere eines Zertifikates oder einer Software, wobei folgende Schritte durchgeführt werden:
- Erzeugen einer nicht signierten Datenmenge,
- erstes signieren der Datenmenge durch das Erzeugen einer ersten Signatur unter Verwendung eines ersten geheimen bzw. privaten Schlüssels eines Schlüsselpaares einer ersten berechtigten Person, wobei das Schlüsselpaar aus einem öffentlichen und dem geheimen Schlüssel besteht,
- prüfen, ob die Datenmenge mit der ersten Signatur oder auch mit weiteren Signaturen von berechtigten Personen versehen ist,
- zweites signieren mindestens der Datenmenge durch eine zweite berechtigte Person durch Erzeugen einer dritten Signatur unter Verwendung des geheimen bzw. privaten Schlüssels eines Schlüsselpaares einer Signaturstelle, wobei das Schlüsselpaar aus einem öffentlichen und dem geheimen Schlüssel der Signaturstelle besteht, wenn die Datenmenge bereits von einer vorbestimmten Anzahl berechtigter Personen signiert worden ist, und
- erzeugen einer signierten Datenmenge, die mindestens die nicht signierte Datenmenge und die unter Verwendung des geheimen bzw. privaten Schlüssels der Signaturstelle erzeugte dritte Signatur aufweist.

Die Aufgabe der Erfindung besteht insbesondere in der Angabe eines Verfahrens mit dem signierte Datenmengen in kontrollierter Weise erzeugbar sind und das dennoch benutzerfreundlich ist.

Diese Aufgabe wird insbesondere durch die Merkmale des unabhängigen Verfahrens-Anspruchs und durch die Merkmale des unabhängigen System-Anspruchs gelöst. Vorteilhafte Ausgestaltungen sind Gegenstand der zugehörigen abhängigen Patentansprüche.

Bei dem erfindungsgemäßen Verfahren zur Erzeugung .einer signierten Datenmenge wird zunächst die nicht signierte Datenmenge, wie z.B. ein Zertifikat, erzeugt.

Das Zertifikat kann insbesondere eine Beschränkung betreffend eine Betriebsstundenzahl, eine Lauf- bzw. Kilometer-Leistung, eine örtlich begrenzte Gültigkeit (in Bezug auf den Aufenthaltsort des Fahrzeugs), eine Zeitangabe oder Zeitdauer, ein oder mehrere Fahrzeugtypen, ein oder mehrere Steuergeräte oder Steuergerätetypen, eine Fahrgestellnummer oder eine Steuergerätenummer aufweisen.

Ferner kann das Zertifikat den öffentlichen Schlüssel eines Trust-Centers bzw. einer (untergeordneten) Signaturstelle und/oder einer Freischaltcode-Stelle und/oder einer Softwaresignatur-Stelle, insbesondere im Sinne der DE 101 40 721 A1, aufweisen.

Im nächsten Schritt wird die Datenmenge durch das Erzeugen einer ersten Signatur unter Verwendung eines ersten geheimen bzw. privaten Schlüssels einer ersten berechtigten Person signiert.

Bei einer bevorzugten Ausführungsform der Erfindung wird der erste geheime Schlüssel der ersten Person durch eine der ersten Person zugeordnete erste Mikroprozessor-Chipkarte bereitgestellt. Bei der Benutzung der Chipkarte wird bevorzugt zunächst die persönliche Identifikationsnummer, die sogenannte PIN, abgefragt. Wird die korrekte PIN eingegeben, kann die Chipkarte bei einer Ausführungsform der Erfindung zum Signieren unter Verwendung des ersten geheimen bzw. privaten Schlüssels benutzt werden.

Bevorzugt wird die unsignierte Datenmenge mit dem öffentlichen Schlüssel des Trust-Centers bzw. der Signaturstelle versehen und unter Verwendung des ersten geheimen bzw. privaten Schlüssels einer ersten berechtigten Person erstmalig signiert bzw. mit einer ersten Signatur versehen.

Optional kann die mit der ersten Signatur versehene Datenmenge zur Erhöhung der Sicherheit gegen Missbrauch mit einer oder mehreren weiteren Signaturen von weiteren berechtigten Personen versehen werden.

Im nächsten Schritt wird überprüft, ob die Datenmenge mit der ersten Signatur oder - falls in einem Berechtigungskonzept aus Sicherheitsgründen so vorgesehen - auch mit den weiteren Signaturen von berechtigten Personen versehen ist.

Ist die Datenmenge mit der ersten Signatur bzw. einer vorbestimmten Anzahl an Signaturen versehen, wird mindestens die Datenmenge unter Verwendung des geheimen bzw. privaten Schlüssels eines Schlüsselpaares einer Signaturstelle durch eine zweite bzw. eine weitere berechtigte Person signiert.

Bevorzugt wird nicht nur die Datenmenge unter Verwendung des geheimen bzw. privaten Schlüssels des Schlüsselpaares der Signaturstelle signiert. Vielmehr wird bevorzugt die unsignierte Datenmenge mit dem öffentlichen Schlüssel der ersten signierenden Person versehen und die mit dem öffentlichen Schlüssel der ersten Person versehene unsignierte Datenmenge wird mit dem privaten Schlüssel der ersten Person signiert.

Falls im konkreten Berechtigungskonzept so festgelegt, wird die dabei erhaltene Datenmenge von mindestens einer weiteren berechtigten Person mit deren öffentlichem Schlüssel versehen und die dann erhaltene Datenmenge unter Verwendung des öffentlichen Schlüssels von der weiteren Person unter Verwendung von deren privatem Schlüssel signiert.

Fehlt nur noch die Signatur einer einzigen berechtigten Person gemäß dem festgelegten Berechtigungskonzept, das insbesondere die Anzahl der Personen festlegt, deren Signatur erforderlich ist, so wird die dann vorliegende Datenmenge um den öffentlichen Schlüssel dieser Person ergänzt und die Gesamtdatenmenge unter Verwendung des privaten Schlüssels dieser Person signiert. Die Gesamtdatenmenge wird dann durch den öffentlichen Schlüssel der Signaturstelle ergänzt und alles wird unter Verwendung des privaten Schlüssels der Signaturstelle von dieser Person signiert. Anhand der öffentlichen Schlüssel und der Anwendung des Hash-Algorithmus lässt sich aus der Gesamtdatenmenge in eindeutiger Weise ermitteln, wer die unsignierte Datenmenge bei welcher Signaturstelle signiert hat.

Kommt es lediglich auf die Einhaltung des Berechtigungskonzepts - ohne Nachweis welche konkreten Personen signiert haben - an, so kann abschließend auch lediglich die unsignierte Datenmenge mit dem geheimen Schlüssel der Signaturstelle von der letzten Person in der Reihe signiert werden. Dies hält die Gesamtdatenmenge klein, was insbesondere bei deren Datenübertragung von Vorteil ist.

Ebenso ist es denkbar, dass die unsignierte Datenmenge mit einer laufenden Nummer oder dgl. versehen wird und diese Gesamtdatenmenge mit dem geheimen Schlüssel der Signaturstelle von der letzten Person in der Reihe signiert wird. Unter dieser laufenden Nummer kann dann insbesondere andernorts die o.g. Gesamtdatenmenge, die sämtliche öffentlichen Schlüssel und Signaturen der beteiligten Personen sowie den öffentlichen Schlüssel der Signaturstelle und deren durch die letzte Person veranlasste Signatur aufweist, zu Beweiszwecken, gespeichert werden.

Bei einer bevorzugten Ausführungsform der Erfindung wird der zweite geheime Schlüssel der zweiten Person durch eine der zweiten Person zugeordnete zweite Mikroprozessor-Chipkarte bereitgestellt. Bei der Benutzung der Chipkarte wird bevorzugt ebenfalls zunächst die persönliche Identifikationsnummer, die sogenannte PIN, abgefragt. Wird die korrekte PIN eingegeben, kann die Chipkarte zum Signieren unter Verwendung des zweiten geheimen bzw. privaten Schlüssels der zweiten Person und - bei Vorhandensein der ersten Signatur und ggf. der weiteren Signaturen, je nach Berechtigungskonzept - zum Signieren unter Verwendung des geheimen bzw. privaten Schlüssels der Signaturstelle benutzt werden.

Bevorzugt handelt es sich bei den geheimen Schlüsseln um die geheimen Schlüssel jeweils eines anderen komplementären Public-Key-Schlüssel-Paars.

Ein erfindungsgemäß signiertes und negativ auf Unverfälschtheit hin überprüftes Zertifikat ermöglicht bevorzugt die Nutzung bzw. die Freigabe des Ablaufs einer in einem Fahrzeug, wie insbesondere ein Personenkraftwagen oder Motorrad, zur Verfügung gestellten Software bzw. Ablaufsteuerung.

An dem erfindungsgemäßen Verfahren ist insbesondere von Vorteil, dass eine auf ihre Gültigkeit hin überprüfbare Datenmenge, wie insbesondere ein unter Verwendung des geheimen Schlüssels der Signaturstelle oder des Trust-Centers signiertes Zertifikat oder eine signierte Software nur dann erzeugt werden kann, wenn mindestens zwei autorisierte Personen oder Stellen die unsignierte Datenmenge signiert .haben. Ist die Datenmenge im Rahmen des erfindungsgemäßen Verfahrens bereits mit einer autorisierten Signatur versehen worden, wird bevorzugt die Datenmenge, der öffentliche Schlüssel des Trust-Centers bzw. der Signaturstelle und die erste Signatur auf ihre Unverfälschtheit hin überprüft und erst dann ggf. von der nächsten Stelle oder Person ebenfalls mit einer Signatur versehen. Diese Überprüfung auf Unverfälschtheit durch die nächste Person oder Stelle erfolgt unter Verwendung der öffentlichen Schlüssel der ersten Person oder Stelle.

Bei einer bevorzugten Ausführungsform der Erfindung, wird die nach dem erfindungsgemäßen Verfahren erzeugte Datenmenge in dem Steuergerät eines Kraftfahrzeugs oder Motorrads - vorzugsweise gegen Veränderung oder Austausch geschützt - abgespeichert und ein in dem Steuergerät vorgesehener Mikroprozessor prüft die Unverfälschtheit der Datenmenge anhand des öffentlichen Schlüssels des der Signaturstelle oder des Trust-Centers.

Bei einer bevorzugten Ausführungsform der Erfindung wird das erfindungsgemäß erzeugte, signierte Zertifikat in einem zuverlässig gegen Überschreiben gesicherten, aber lesbaren Bereich des Steuergeräts gespeichert.

Bei einer bevorzugten Ausführungsform der Erfindung ist das Steuergerät mit einem Sicherheits-Chip bzw. einem sogenannten Crypto-Chip versehen. Dieser weist bevorzugt einen ablaufgesteuerten Mikroprozessor und Speicherbereiche auf, deren Zugriff der Mikroprozessor verwaltet und in denen der öffentliche Schlüssel der Signaturstelle bzw. des Trust-Centers zur Prüfung der Unverfälschtheit der Datenmenge zumindest gegen Überschreiben gesichert gespeichert ist. Bevorzugt wendet der Mikroprozessor den Hash-Algorithmus auf die Datenmenge zur Ermittlung der Hash-Werte an, um nachfolgend in an sich bekannter Weise unter Verwendung des öffentlichen Schlüssels der Signaturstelle bzw. des Trust-Centers und der Signatur der Signaturstelle bzw. des Trust-Centers zu prüfen, ob die Datenmenge nach der Signatur der Signaturstelle bzw. des Trust-Centers verändert worden ist.

Bevorzugt handelt es sich bei dem Sicherheits-Chip um einen Mikroprozessorschaltkreis des Typs, wie er von Eurocheque-Karten bzw. Geldkarten oder sonstigen Bankkarten her bekannt ist. Der Schaltkreis zeichnet sich insbesondere dadurch aus, dass der Zugriff auf die in ihm gespeicherten sicherheitskritischen Daten unter der alleinigen Kontrolle des Mikroprozessors des Chips stehen und dessen Ablaufsteuerung sowie die sicherheitskritischen Daten und damit der Schaltkreis weitgehend manipulationssicher ist.

Bei einer bevorzugten Ausführungsform der Erfindung ist vorgesehen, dass ein solcher Sicherheits-Chip bzw. Crypto-Chip auch in den Mikroprozessorkarten der signierenden Personen oder Stellen Verwendung findet. In diesen lässt sich in weitgehend manipulationssicherer Weise das Berechtigungskonzept bzw. die Ablaufsteuerung des Berechtigungskonzepts sowie die erforderlichen öffentlichen und geheimen Schlüssel speichern und ausführen.

Die Erfindung wird nachfolgend anhand eines Ausführungsbeispiels, d.h. eines Trust-Center-Signatur-Zertifikats der DE 101 40 721 A1, näher beschrieben, das bei der Herstellung eines neuen Fahrzeugs in diesem gegen Manipulation geschützt gespeichert wird. Dies kann jedoch auch erst nach der Herstellung und dem Verkauf des Fahrzeugs, z.B. auf Anforderung des Kunden hin, geschehen. Es versteht sich, dass in analoger, erfindungsgemäßer Weise auch ein Freischaltcodestelle-Signatur-Zertifikat, ein Software-Signatur-Zertifikat, die Signatur von Freischaltcode-Daten oder auch die Signatur von Software bzw. Software-Code erzeugt werden kann, d.h. ein Verfahren bei dem Signaturen ebenfalls durch mindestens zwei unabhängige Stellen oder Personen erfolgen.

Das Trust-Center-Signatur-Zertifikat weist zumindest das eigentliche Zertifikat und eine Signatur auf, anhand der sich die Unverfälschtheit des Trust-Center-Signatur-Zertifikats überprüfen lässt. Das eigentliche Zertifikat weist bei diesem Ausführungsbeispiel eine Information über das betreffende Trust-Center, eine Gültigkeits- bzw. Nutzbarkeitsbeschränkung im Sinne der DE 101 40 721 A1 und eine Information über die erste und über die zweite Stelle oder Person auf, die mit ihrer Signatur das Trust-Center-Signatur-Zertifikat "gültig gemacht" bzw. "unterschrieben haben", d.h. die das Zertifikat signiert haben.

Das Trust-Center-Signatur-Zertifikat wird durch die im Folgenden beschriebenen Schritte erzeugt. Der Kunde hat ein neues Fahrzeug beim Hersteller bestellt. Die Bestellung umfasst im vorliegenden Ausführungsbeispiel die zeitlich beschränkte Nutzung der Software zum Betrieb eines Navigationssystems, eines softwaregestützten Fahrtenbuches oder einer anderen Software oder Ablaufsteuerung für das konkrete Fahrzeug. Die Software ist im Fahrzeug gespeichert; sie kann jedoch erst dann genutzt werden, wenn im Fahrzeug ein entsprechendes Trust-Center-Signatur-Zertifikat vorhanden ist, das zudem eine Fahrgestellnummer oder dgl. auf weist, die der Fahrgestellnummer oder dgl. des konkreten Fahrzeugs entspricht. Hierzu ist ein Trust-Center-Signatur-Zertifikat erforderlich, in dem angegeben ist, dass die Nutzung der vorgenannten Software, z.B. für ein Jahr, für das konkrete Fahrzeug freigegeben ist.

Bei der Herstellung des Fahrzeugs am Band des Herstellers erfolgt die Anforderung eines entsprechenden Trust-Center-Signatur-Zertifikats beim Trust-Center zur Erledigung der Bestellung des Kunden. Das Trust-Center kann sich beim Hersteller des Fahrzeugs oder auch bei einer vom Hersteller des Fahrzeugs autorisierten Institution befinden, die Software (auch) nach dem Verkauf des Fahrzeugs an den Kunden zur Nutzung durch den Kunden "freischalten" kann, indem sie ein entsprechendes Trust-Center-Signatur-Zertifikat in das Fahrzeug überträgt, wie z.B. per SMS, oder über einen sonstigen "Weg" eines Mobilfunknetzes. Eine autorisierte erste Stelle oder erste Person prüft, ob die Anforderung durch die konkrete Bestellung gedeckt ist. Wenn dies zutrifft und der Anforderung entsprochen werden soll, wird ein der konkreten Anforderung entsprechendes Trust-Center-Signatur-Zertifikat generiert und der öffentliche bzw. nicht geheime Schlüssel der ersten Stelle oder Person, der öffentliche bzw. nicht geheime Schlüssel des Trust-Centers und der öffentliche Schlüssel einer zweiten zur Prüfung vorgesehenen Stelle oder Person an das Trust-Center-Signatur-Zertifikat angehängt.

Auf das konkrete, individualisierte Trust-Center-Signatur-Zertifikat und den hinzugefügten öffentlichen Schlüssel der ersten Stelle oder Person, den öffentlichen Schlüssel der zweiten Stelle oder Person und den öffentlichen Schlüssel des Trust-Centers wird ein bei Public-Key-Verfahren bekannter Hash-Algorithmus angewandt. Der Algorithmus liefert einen sogenannten Hash-Wert, der charakteristisch für die Daten des konkreten Trust-Center-Signatur-Zertifikats in Kombination mit dem konkreten öffentlichen Schlüssel der ersten Stelle oder Person, dem konkreten öffentlichen Schlüssel der zweiten Stelle oder Person und dem konkreten öffentlichen Schlüssel des Trust Centers ist. Der Hash-Wert wird mit dem geheimen bzw. privaten Schlüssel der ersten Stelle oder Person verschlüsselt. Der von der ersten Stelle oder Person verschlüsselte Hash-Wert ist die (erste) Signatur der ersten Stelle oder Person und kennzeichnet die konkrete Daten-Kombination.

Erfindungsgemäß ist vorgesehen, von mindestens einer weiteren, der zweiten Stelle oder Person überprüfen zu lassen, ob das von der ersten Stelle signierte Trust-Center-Signatur-Zertifikat zur Verfügung gestellt werden kann und ob die verwendeten öffentlichen Schlüssel zur ersten Stelle oder Person, zur zweiten Stelle oder Person und zum Trust-Center gehören.

Hat auch die zweite Stelle oder Person festgestellt, dass die Anforderung des von der ersten Stelle oder Person bereitgestellten konkreten Trust-Center-Signatur-Zertifikats berechtigt ist, prüft die zweite Stelle oder Person, ob der öffentliche Schlüssel der ersten Stelle oder Person als zum Signieren berechtigt gilt, ob der öffentliche Schlüssel der zweiten Stelle oder Person korrekt ist, ob die Signatur von der ersten Stelle oder Person vorhanden ist und tatsächlich von ihr stammt und ob der öffentliche Schlüssel des Trust-Centers auch wirklich zum Trust-Center gehört. Hierzu werden die im signierten Trust-Center-Signatur-Zertifikat enthaltenen öffentlichen Schlüssel mit dem als berechtigt bekannten öffentlichen Schlüssel der ersten Stelle oder Person, mit dem als berechtigt bekannten öffentlichen Schlüssel der zweiten Stelle oder Person und mit dem als berechtigt bekannten öffentlichen Schlüssel des Trust-Centers verglichen. Verläuft der Vergleich jeweils positiv und gilt damit der eine öffentliche Schlüssel als der ersten Stelle oder Person, der zweite öffentliche Schlüssel als der zweiten Stelle oder Person und schließlich der dritte öffentliche Schlüssel als dem Trust-Center zugehörig, wird die Signatur der ersten Stelle oder Person auf ihre Unverfälschtheit hin überprüft, um zu ermitteln, ob die erste Signatur tatsächlich von der ersten Stelle oder Person vorgenommen worden ist.

Diese Überprüfung erfolgt, indem der Hash-Algorithmus von der zweiten Stelle oder Person auf das Trust-Center-Signatur-Zertifikat und die zum Zertifikat hinzugefügten öffentlichen Schlüssel der ersten Stelle oder Person, der zweiten Stelle oder Person und des Trust-Centers angewandt wird. Das Ergebnis ist ein Hash-Referenzwert. Die erste Signatur der ersten Stelle oder Person stellt ja - wie bereits ausgeführt - den mit dem geheimen Schlüssel von der ersten Stelle oder Person verschlüsselten Hash-Wert dar. Die erste Signatur wird von der zweiten Stelle oder Person mit dem öffentlichen Schlüssel der ersten Stelle oder Person entschlüsselt. Das Ergebnis ist ein Hash-Wert, der mit dem von der zweiten Stelle oder Person ermittelten Hash-Referenzwert verglichen wird.

Stimmen beide Werte überein, so gilt das Trust-Center-Signatur-Zertifikat als von der ersten autorisierten Stelle oder Person genehmigt. Will auch die zweite Stelle oder Person das Trust-Center-Signatur-Zertifikat genehmigen, so wird auf das Trust-Center-Signatur-Zertifikat, den öffentlichen Schlüssel der ersten Stelle oder Person, den öffentlichen Schlüssel des Trust-Centers, die erste Signatur und den öffentlichen Schlüssel der zweiten Stelle oder Person der Hash-Algorithmus angewandt. Das Ergebnis ist ein weiterer Hash-Wert. Dieser Hash-Wert wird mit dem geheimen Schlüssel der zweiten Stelle oder Person verschlüsselt und bildet eine zweite Signatur, die zum Trust-Center-Signatur-Zertifikat hinzugefügt wird.

Das Trust-Center-Signatur-Zertifikat, die öffentlichen Schlüssel der ersten Stelle oder Person, der zweiten Stelle oder Person, des Trust-Centers und die Signaturen der ersten Stelle oder Person und der zweiten Stelle oder Person werden als hier sogenanntes doppelt signiertes Trust-Center-Signatur-Zertifikat in das Fahrzeug transferiert und dort, insbesondere in einem Steuergerät, gespeichert.

Ein im Steuergerät, in einem dem Steuergerät zugeordneten Sicherheits- bzw. Crypto-Chip, in einer Chipkarte oder andernorts im Fahrzeug vorgesehener Mikroprozessor prüft unter Verwendung der korrekten öffentlichen Schlüssel und des Hash-Algorithmus, ob das doppelt signierte Trust-Center-Signatur-Zertifikat unmanipuliert ist. Ggf. bestimmen die Nutzungsangaben bzw. die Nutzungsbeschränkungen im erfindungsgemäßen Trust-Center-Signatur-Zertifikat Art und Umfang der Freigabe der im Fahrzeug gespeicherten Software zur Nutzung durch den Fahrer des betreffenden Fahrzeugs.

## Patentansprüche

1. Verfahren zum Signieren einer Datenmenge, in einem Public-Key-System, wie insbesondere eines Zertifikates oder einer Software,
wobei folgende Schritte durchgeführt werden:
- Erzeugen einer nicht signierten Datenmenge,
- erstes Signieren der Datenmenge durch das Erzeugen einer ersten Signatur unter Verwendung eines ersten geheimen bzw. privaten Schlüssels eines Schlüsselpaares einer ersten berechtigten Person, wobei das Schlüsselpaar aus einem öffentlichen und dem geheimen Schlüssel besteht,
- zweites Signieren mindestens der Datenmenge durch das Erzeugen einer zweiten Signatur unter Verwendung eines zweiten geheimen bzw. privaten Schlüssels eines Schlüsselpaares, bestehend aus einem öffentlichen und dem geheimen Schlüssel, der zweiten Person,
- Prüfen, ob die Datenmenge mit der ersten Signatur oder auch mit weiteren Signaturen von berechtigten Personen versehen ist,
- drittes Signieren mindestens der Datenmenge durch eine zweite berechtigte Person durch Erzeugen einer dritten Signatur unter Verwendung des geheimen bzw. privaten Schlüssels eines Schlüsselpaares einer Signaturstelle, wobei das Schlüsselpaar aus einem öffentlichen und dem geheimen Schlüssel der Signaturstelle besteht, wenn die Datenmenge bereits von einer vorbestimmten Anzahl berechtigter Personen signiert worden ist,
- Erzeugen einer signierten Datenmenge, die mindestens die nicht signierte Datenmenge und die unter Verwendung des geheimen bzw. privaten Schlüssels der Signaturstelle erzeugte dritte Signatur aufweist, und
***dadurch gekennzeichnet,***
- **dass** der Datenmenge eine diese individualisierende Information, wie insbesondere eine laufende Nummer, vor dem ersten Signieren hinzugefügt wird, sowohl die Datenmenge als auch die individualisierende Information mit der zweiten Signatur versehen wird und zumindest bei der Signaturstelle, bevorzugt jedoch auch bei einer die Signaturstelle autorisierenden Stelle, wie insbesondere ein Fahrzeughersteller, unter der individualisierenden Information mindestens die mit der zweiten Signatur versehene Datenmenge, die erste Signatur und die dritte Signatur unveränderbar gespeichert werden, um in eindeutiger Weise ermitteln zu können, welche Personen bzw. Personengruppe die Datenmenge signiert hat, und
- **dass** die Datenmenge ein Zertifikat ist, das die Nutzung bzw. den Ablauf einer in einem Fahrzeug, wie insbesondere ein Personenkraftwagen oder Motorrad, zur Verfügung gestellten Software bzw. Ablaufsteuerung ermöglicht, oder dass die Datenmenge die Software bzw. Ablaufsteuerung ist.

2. Verfahren nach Anspruch 1, **dadurch gekennzeichnet, dass** die Datenmenge mit der ersten Signatur, der zweiten Signatur und mit der dritten Signatur versehen wird.

3. Verfahren nach Anspruch 1, **dadurch gekennzeichnet, dass** die signierte Datenmenge anhand des öffentlichen Schlüssels der Signaturstelle auf ihre Unverfälschtheit hin überprüft wird und dieser gegen Veränderung gesichert gespeichert wird, vorzugsweise dort, wo die Überprüfung stattfindet.

4. Verfahren nach Anspruch 1 oder 3, **dadurch gekennzeichnet, dass** der öffentliche Schlüssel der Signaturstelle im Fahrzeug bzw. in mindestens einem Steuergerät des Fahrzeugs gegen Veränderung gesichert gespeichert wird.

5. Verfahren nach Aspruch 1, **dadurch gekennzeichnet, dass** das Zertifikat eine Beschränkung aufweist, wie insbesondere eine fahrzeugspezifische und/oder zeitliche und/oder örtliche und/oder persönliche Beschränkung, und diese insbesondere eine Betriebsstundenzahl, eine Lauf- bzw. Kilometer-Leistung, eine örtlich in Bezug auf den Aufenthaltsort des Fahrzeugs begrenzte Gültigkeit eine Zeitangabe oder Zeitdauer, ein oder mehrere Fahrzeugtypen, ein oder mehrere Steuergeräte oder Steuergerätetypen, eine Fahrgestellnummer oder eine Steuergerätenummer betrifft.

6. Verfahren nach einem der Ansprüche 1 bis 5, **dadurch gekennzeichnet, dass** der erste geheime Schlüssel der ersten Person von einer der ersten Person zugeordneten ersten Mikroprozessor-Chipkarte und/oder der zweite geheime Schlüssel der zweiten Person von einer der zweiten Person zugeordneten zweiten Mikroprozessor-Chipkarte und/oder der geheime Schlüssel der Signaturstelle in der ersten und in der zweiten Mikroprozessor-Chipkarte gegen Veränderung und Auslesen geschützt gespeichert und zum Signieren der Datenmenge durch die betreffende Mikroprozessor-Chipkarte bereitgehalten wird.

7. Verfahren nach Anspruch 6, **dadurch gekennzeichnet, dass** in der ersten und der zweiten Mikroprozessor-Chipkarte die Ablaufsteuerung eines Berechtigungskonzepts gespeichert ist, das insbesondere festlegt, dass die Datenmenge mindestens mit der ersten Signatur versehen sein muss, bevor die Datenmenge unter Verwendung des geheimen bzw. privaten Schlüssels der Signaturstelle mit der dritten Signatur signiert bzw. versehen wird.

8. Verfahren nach Anspruch 6 oder 7, **dadurch gekennzeichnet, dass** der öffentliche Schlüssel jeder Person einer Vielzahl von Personen, die im Rahmen des Berechtigungskonzepts zum Signieren der Datenmenge mit einer Mikroprozessor-Chipkarte berechtigt sind, in jeder von deren Mikroprozessor-Chipkarten gegen Veränderung gesichert gespeichert sind, um zu ermitteln, ob die erste Signatur von einer berechtigten Person stammt.

9. Verfahren nach einem der Ansprüche 6 bis 8, **dadurch gekennzeichnet, dass** die erste und/oder weitere Mikroprozessor-Chipkarte erst durch die Eingabe einer persönlichen Identifikationsnummer, einer sogenannten PIN, zur Signierung des Zertifikats freigegeben wird.

10. Steuergerät, insbesondere für ein Kraftfahrzeug oder Motorrad, **dadurch gekennzeichnet, dass** das Steuergerät eine Datenmenge aufweist, die nach einem der vorstehenden Verfahrensansprüche erzeugt worden ist und ein in dem Steuergerät vorgesehener Mikroprozessor die Unverfälschtheit der Datenmenge zumindest anhand des öffentlichen Schlüssels der Signaturstelle überprüft, wobei bevorzugt der öffentliche Schlüssel in einem gegen Veränderung gesicherten Speicherbereich des Steuergeräts gespeichert ist.

11. Datenverarbeitungssystem, **dadurch gekennzeichnet, dass** das Datenverarbeitungssystem Mittel zur Durchführung des Verfahrens nach einem der Ansprüche 1 bis 9 beinhaltet.

12. Computer-Programm-Produkt, insbesondere zur Ablaufsteuerung eines Steuergeräts oder eines Datenverarbeitungssystems eines Kraftfahrzeugs oder eines Motorrads, **dadurch gekennzeichnet, dass** das Computer-Programm-Produkt ein Verfahren nach einem der vorstehenden Ansprüche 1 bis 9 ausführt.

13. Chipkarte zum Signieren einer Datenmenge in einem Public-Key-System, **dadurch gekennzeichnet, dass** die Chipkarte Mittel zur Ausführung eines Verfahrens nach einem der vorstehenden Ansprüche 1 bis 9.

## Claims

1. A method for signing a dataset in a public key system, such as, more especially a certificate or software, wherein the following steps are carried out:
- generating a non-signed dataset,
- first signing of the dataset by the generating of a first signature using a first secret or private key of a key pair of a first authorised person, the key pair comprising a public and the private key,
- second signing of at least the dataset by the generating of a second signature using a second secret or private key of a key pair, comprising a public and the secret key, of the second person,
- checking whether the dataset is provided with the first signature or else with further signatures of authorised people,
- third signing of at least the dataset by a second authorised person by generating a third signature using the secret or private key of a key pair of a signature site, the key pair comprising a public and the secret key of the signature site, if the dataset has already been signed by a predetermined number of authorised people,
- generating a signed dataset, which has at least the non-signed dataset and the third signature generated using the secret or private key of the signature site,
**characterised in that**,
- a piece of information individualising the dataset, such as more especially a serial number, is added to the dataset before the first signing, both the dataset and the individualising information are provided with the second signature and at least at the signature site, but preferably also at a site authorising the signature site, such as more especially a vehicle producer, at least the dataset provided with the second signature, the first signature and the third signature are non-variably stored under the individualising information in order to be able to determine in an unambiguous manner, which people or group of people have signed the dataset, and
- the dataset is a certificate, which allows the use or the running of software or a sequence control provided in a vehicle, such as more especially a passenger car or motorcycle, or **in that** the dataset is the software or sequence control.

2. A method according to claim 1, **characterised in that** the dataset is provided with the first signature, the second signature and with the third signature.

3. A method according to claim 1, **characterised in that** the signed dataset is checked with the aid of the public key of the signature site for its unfalsified state, and this is stored secured against change, preferably where the checking takes place.

4. A method according to claim 1 or 3, **characterised in that** the public key of the signature site is stored in the vehicle or in at least a control apparatus of the vehicle, in a manner secured against change.

5. A method according to claim 1, **characterised in that** the certificate has a limitation, such as more especially a vehicle-specific and/or time and/or location and/or personal limitation, and this relates more especially to a number of operating hours, a running or kilometre performance, a validity limited in relation to the location of the vehicle, time information or time period, one or more vehicle types, one or more control apparatuses or control apparatus types, a chassis number or a control apparatus number.

6. A method according to any one of claims 1 to 5, **characterised in that** the first secret key of the first person is stored by a first microprocessor chip card associated with the first person and/or the second secret key of the second person is stored by a second microprocessor chip card associated with the second person and/or the secret key of the signature site is stored in the first and in the second microprocessor chip card, in a manner protected against change and reading out and is provided by the relevant microprocessor chip card for the signing of the dataset.

7. A method according to claim 6, **characterised in that** the sequence control of an authorisation concept is stored in the first and the second microprocessor chip card, which authorisation concept establishes, more especially, that the dataset has to be provided at least with the first signature before the dataset is signed or provided with the third signature, using the secret or private key of the signature site.

8. A method according to claim 6 or 7, **characterised in that** the public key of each person of a large number of people, who are authorised in the scope of the authorisation concept to sign the dataset with a microprocessor chip card, is stored in each of their microprocessor chip cards in a manner secured against change, in order to determine whether the first signature originates from an authorised person.

9. A method according to any one of claims 6 to 8, **characterised in that** the first and/or further microprocessor chip card is not released until the input of a personal identification number, a so-called PIN for signing the certificate.

10. Control apparatus, more especially for a motor vehicle or motorcycle, **characterised in that** the control apparatus has a dataset, which has been generated according to any one of the preceding claims, and a microprocessor provided in the control apparatus checks the unfalsified state of the dataset at least with the aid of the public key of the signature site, wherein the public key is preferably stored in a storage area of the control apparatus that is secured against change.

11. A data processing system, **characterised in that** the data processing system contains means for carrying out the method according to any one of claims 1 to 9.

12. A computer program product, more especially for the sequence control of a control apparatus or of a data processing system of a motor vehicle or of a motorcycle, **characterised in that** the computer program product carries out a method according to any one of the preceding claims 1 to 9.

13. A chip card for signing a dataset in a public key system, **characterised in that** the chip card contains means for carrying out a method according to any one of the preceding claims 1 to 9.

## Revendications

1. Procédé pour signer un ensemble de données dans un système à clé publique tel que notamment d'un certificat ou d'un programme, procédé consistant à exécuter les étapes suivantes :
- on génère un ensemble de données non signées,
- on fait une première signature de l'ensemble des données en générant une première signature, en utilisant une première clé secrète ou privée d'une paire de clés d'une première personne autorisée, la paire de clés se composant d'une clé officielle et d'une clé secrète,
- on effectue une seconde signature au moins de l'ensemble des données en générant une seconde signature en utilisant une seconde clé secrète ou privée d'une paire de clés composée d'une clé officielle et d'une clé secrète de la seconde personne,
- on vérifie si l'ensemble des données comporte la première signature ou aussi d'autres signatures de personnes autorisées,
- on effectue une troisième signature au moins de l'ensemble des données par une seconde personne autorisée en générant une troisième signature en utilisant la clé secrète ou privée d'une paire de clés d'un poste de signature, la paire de clés se composant d'une clé officielle et d'une clé secrète du poste de signature si l'ensemble des données a déjà été signé par un nombre prédéterminé de personnes autorisées,
- on génère un ensemble de données, signé, qui comprend au moins l'ensemble des données non signé et la troisième signature générée en utilisant la clé secrète ou privée du poste de signature,
**caractérisé en ce qu'**
- on ajoute à l'ensemble des données, une information qui l'individualise, notamment un numéro courant avant la première signature, et à la fois l'ensemble des données aussi bien que l'information individualisée reçoivent la seconde signature et au moins au poste de signature, mais de manière préférentielle, toutefois également à un poste autorisant le poste de signature, notamment un constructeur de véhicules, enregistre avec une information individualisée, de façon inchangée au moins l'ensemble des données portant la seconde signature, la première signature et la troisième signature, pour pouvoir déterminer sans équivoque les personnes ou le groupe de personnes ayant signé l'ensemble des données, et
- l'ensemble des données est un certificat permettant d'utiliser ou d'exécuter un programme ou une commande d'exécution disponible dans un véhicule, notamment un véhicule de tourisme ou une moto, ou encore l'ensemble des données est le programme ou la commande d'exécution.

2. Procédé selon la revendication 1,
**caractérisé en ce que**
l'ensemble des données reçoit la première signature, la seconde signature et la troisième signature.

3. Procédé selon la revendication 1,
**caractérisé en ce que**
l'ensemble des données, signé à l'aide de la clé officielle du poste de signature, est vérifié quant à son authenticité et il est enregistré de façon protégée contre les violations, de préférence là où se fait le contrôle.

4. Procédé selon la revendication 1 ou 3,
**caractérisé en ce que**
la clé officielle du poste de signature dans le véhicule ou d'au moins un appareil de commande du véhicule, est enregistrée de manière protégée contre toute modification.

5. Procédé selon la revendication 1,
**caractérisé en ce que**
le certificat comporte une limitation notamment spécifique au véhicule et/ou dans le temps et/ou dans l'espace et/ou relative à une personne et celle-ci concerne notamment un nombre d'heures de fonctionnement, une capacité de fonctionnement ou un kilométrage, une validité limitée localement par rapport à l'endroit où séjourne le véhicule, une indication de temps ou une durée; un ou plusieurs types de véhicules, un ou plusieurs appareils de commande ou types d'appareils de commande, un numéro de constructeur du véhicule ou un numéro d'appareil de commande.

6. Procédé selon les revendications 1 à 5,
**caractérisé en ce que**
la première clé secrète de la première personne d'une première carte à puce à microprocesseur associée à la première personne et/ou la seconde clé secrète de la seconde personne d'une seconde carte à puce à microprocesseur associée à la seconde personne et/ou la clé secrète du poste de signature sont enregistrées de façon protégée vis-à-vis des modifications et de la lecture dans la première et dans la seconde carte à puce à microprocesseur et sont mises à disposition pour signer l'ensemble des données par la carte à puce à microprocesseur concernée.

7. Procédé selon la revendication 6,
**caractérisé en ce que**
la commande de l'exécution d'un concept d'autorisation, est enregistrée dans la première et dans la seconde carte à puce à microprocesseur, ce concept étant notamment fixé pour que l'ensemble des données comporte au moins la première signature avant que l'ensemble de données ne reçoive la troisième signature ou ne soit signé par la troisième signature en utilisant la clé secrète ou privée du poste de signature.

8. Procédé selon la revendication 6 ou 7,
**caractérisé en ce que**
la clé officielle de chaque personne d'un ensemble de personnes autorisées, dans le cadre du concept d'autorisation, à signer l'ensemble des données avec une carte à puce à microprocesseur est enregistrée de manière protégée contre les modifications dans les cartes à puce à microprocesseur pour déterminer si la première signature est celle d'une personne autorisée.

9. Procédé selon les revendications 6 à 8,
**caractérisé en ce que**
la première et/ou d'autres cartes à puce à microprocesseur sont libérées seulement par l'introduction d'un numéro d'identification personnel, c'est-à-dire du numéro PIN pour signer le certificat.

10. Appareil de commande notamment pour un véhicule automobile ou une moto,
**caractérisé en ce que**
l'appareil de commande comporte un ensemble des données, généré selon l'une des revendications de procédé ci-dessus, et un microprocesseur dans l'appareil de commande vérifie l'authenticité de l'ensemble des données au moins à l'aide de la clé officielle du point de signature, et
de manière préférentielle, la clé officielle est enregistrée dans une zone de mémoire de l'appareil de commande, protégée contre les modifications.

11. Système de traitement de données,
**caractérisé en ce qu'**
il comporte des moyens pour la mise en oeuvre du procédé selon les revendications 1 à 9.

12. Produit programme d'ordinateur notamment pour commander l'exécution d'un appareil de commande ou d'un système de traitement de données d'un véhicule automobile ou d'une moto,
**caractérisé en ce que**
le produit programme d'ordinateur exécute le procédé selon les revendications 1 à 9.

13. Carte à puce pour signer un ensemble de données dans un système à clé publique,
**caractérisée en ce que**
la carte à puce comporte des moyens pour exécuter le procédé selon les revendications précédentes 1 à 9.
